# EUROPEAN PATENT SPECIFICATION

(11) **EP 3 980 566 B1**
(45) Date of publication and mention of the grant of the patent: **06.05.2026**
(21) Application number: 20728775.6
(22) Date of filing: 01.06.2020
(51) Int. Cl.: C21B 13/00, C21B 5/06, C21B 13/02

(54) **METHOD AND SYSTEM FOR PRODUCING STEEL OR MOLTEN-IRON-CONTAINING MATERIALS WITH REDUCED EMISSIONS**
VERFAHREN UND SYSTEM ZUR HERSTELLUNG VON STAHL- ODER EISENSCHMELZEHALTIGEN WERKSTOFFEN MIT REDUZIERTEN EMISSIONEN
PROCÉDÉ ET SYSTÈME DE PRODUCTION D'ACIER OU DE MATÉRIAUX CONTENANT DE LA FONTE LIQUIDE AVEC DES ÉMISSIONS RÉDUITES

(30) Priority: 04.06.2019 IT 201900008019
(43) Date of publication of application: 13.04.2022
(73) Proprietor: Tenova S.p.A., 20149 Milano (IT)
(72) Inventor: DUARTE ESCAREÑO, Pablo, Enrique, Monterrey, Nuevo Leon 64610 (MX)
(74) Representative: PGA S.p.A.
(86) International application number: PCT/EP2020/065122
(87) International publication number: WO 2020/245070

(56) References cited:
- EP-A1- 3 156 519
- WO-A2-2011/116141
- DE-U1- 202011 105 262
- JP-A- S56 151 206
- US-A- 5 454 853
- JASI AMANDA: "Sunfire and Salzgitter to build world's most powerful steam electrolysis plant - News - The Chemical Engineer", 18 April 2019 (2019-04-18), pages 1 - 2, XP055938734, Retrieved from the Internet <URL:https://www.thechemicalengineer.com/news/sunfire-and-salzgitter-to-build-world-s-most-powerful-steam-electrolysis-plant/> [retrieved on 20220705]
- SCHAPER RALPH: "Green Industrial Hydrogen via Reversible High-Temperature Electrolysis", SALZGITTER FLACHSTAHL GMBH, 29 September 2016 (2016-09-29), pages 1 - 5, XP055938750
- J. SCHEFOLD ET AL: "Long-term Fast Current/Power Cycling at Solid-Oxide Electrolyser Cells", WHEC 2018, ''FAST POWER CYCLING AT SOEC'', EIFER, 18 June 2018 (2018-06-18), pages 1 - 15, XP055938755
- RAMIREZ M.: "Performance evaluation of an ORC integrated to a waste heat recovery unit in a Steel mill", 4TH INTERNATIONAL SEMINAR ON ORGANIC RANKINE CYCLE POWER SYSTEMS. 13-15 SEPTEMBER 2017, MILANO, ITALY, 13 September 2017 (2017-09-13), XP055943860

## Description

### BACKGROUND OF THE INVENTION

The present invention generally relates to methods and systems for producing steel or similar molten-iron-containing materials in melting or smelting furnaces utilizing pre-reduced iron ore, known also as direct reduced iron (DRI) or sponge iron, wherein the emission of CO₂ and other greenhouse gases is significantly low.

Production of steel contributes with an important proportion of the CO₂ industrial emissions mainly due to the use of coal as energy source and raw material in integrated steelmaking plants comprising blast furnaces and blast oxygen converters. Steel is also produced through an alternate route comprising direct reduction of iron ores

Although several proposals of methods and systems for recovery of heat from hot gases to produce steam and power may be found in the prior art, the present invention offers an integrated system for "green" steelmaking wherein the CO₂ footprint is considerably decreased since the reducing agent is hydrogen being transformed to water in an iron reduction facility and said water used to produce hydrogen by electrolysis with great economic advantages. Such an integrated system is the gist of the present invention.

Applicants have found US patent 8,587,138 to Statler et al. as an example of some proposals to utilize the heat generated in the melting process of metals and smelting of ores to generate electricity. Statler however does not disclose or suggest the integration of a direct reduction plant with the metal melting plant to minimize the CO₂ emissions of the steelmaking process. Document DE202011105262 disclose a method of producing reduced iron, where steam produced using hot gases from the process is used for producing H2 in a electrolyzer, where H2 is further used in methanol production.

Some proposed methods for decreasing the CO₂ emissions in steelmaking refer to utilization of renewable energy sources, such as solar, wind and biomass energy to produce electricity which is in turn used to produce hydrogen by electrolysis, however these systems are still under development and the cost of such electricity is still high as compared to the grid power available from other sources.

Almost 70% of the energy losses in EAF (Electric Arc Furnace) steelmaking are associated with the off gas, through which about 15% of the energy input is lost as sensible heat. Un-combusted CO evolved during the melting and refining process carried out in the EAF is burnt with air in a post-combustion chamber for the off gas. It is estimated that more than 25% of the total energy input of the EAF (Electric Arc Furnace) can be recovered and utilized. This heat recovery of the EAF off gas however is not widely practiced due to the harsh environment of the fume system of the EAF and the discontinuity of the gases generation as the EAF process is a batch-process.

The heat of the EAF (Electric Arc Furnace) off gas can be recovered using high-pressure tubes designed to withstand the fume system conditions at pressures of 15 to 40 bar and produce high-pressure steam at 216°C. The temperature of the off gas after the heat recovery step is reduced to about 600°C. Using a steam accumulator, the high-pressure steam production can be utilized in a continuous manner irrespective of the EAF (Electric Arc Furnace) process cyclic nature. Steam production at an average rate of 20 t/h from 140t/h EAF (Electric Arc Furnace) has been demonstrated by Tenova S.p.A. A second heat recovery stage can be added to use the heat content of the fume gases after the steam production, wherein the temperature of the off gas is lowered from about 600°C to about 200°C using a standard waste heat boiler. Utilizing the two heat recovery stages, about 75% to 80% of the total energy content of the EAF off gas can be recovered. This recovered energy amounts to about 24,000 megawatt hour (MWh/year).

The present invention utilizes heat energy produced in steelmaking processes that otherwise is wasted by an integration of a DRI melting furnace, a DRI production plant and an electrolysis unit to generate hydrogen thus decreasing the use of hydrocarbons to produce said DRI and consequently the CO₂ emissions to the atmosphere.

### SUMMARY OF THE INVENTION

The present invention provides a method for producing molten steel or molten-iron-containing materials with reduced emissions of carbon dioxide comprising producing DRI in a direct reduction furnace with a reducing gas comprising hydrogen; melting at least a portion of said DRI in a melting furnace and generating hot gases; producing steam and/or hot water using the heat contained in said hot gases. From said steam is produced hydrogen and/or hot water by electrolysis and at least a portion of said hydrogen may be fed to said direct reduction furnace as a component of said reducing gas to produce said DRI (Direct Reduced Iron).

The invention also provides a system for producing molten steel or molten-iron-containing materials wherein the CO₂ emissions are minimized by using hydrogen in a DRI production facility which is produced through electrolysis using energy from a DRI melting facility.

In an embodiment, the system of the invention comprises a direct reduction furnace to produce DRI; a DRI melting furnace (EAF) to melt said DRI generating hot gases; a heat recovery unit to produce steam and/or hot water using the heat contained in said hot gases; and an electrolysis unit to produce hydrogen from said steam and/or hot water, which hydrogen is fed to said direct reduction furnace to produce DRI.

In an embodiment, the system of the invention further comprises an electric power generator to produce electric energy utilizing steam from the heat recovery unit, which electricity is used in said electrolysis unit to produce hydrogen.

### BRIEF DESCRIPTION OF THE FIGURES

Figure 1 shows a system for producing steel comprising a direct reduction plant to produce DRI, a DRI melting furnace generating gases at high temperature, a heat recovery unit wherein steam is produced to generate electricity which is used in an electrolysis unit to produce hydrogen utilized in said direct reduction plant.
Figure 2 shows an embodiment of the steelmaking system of Figure 1 with some more details of the main components of the steel making system.

### DETAILED DESCRIPTION OF SOME PREFERRED EMBODIMENTS

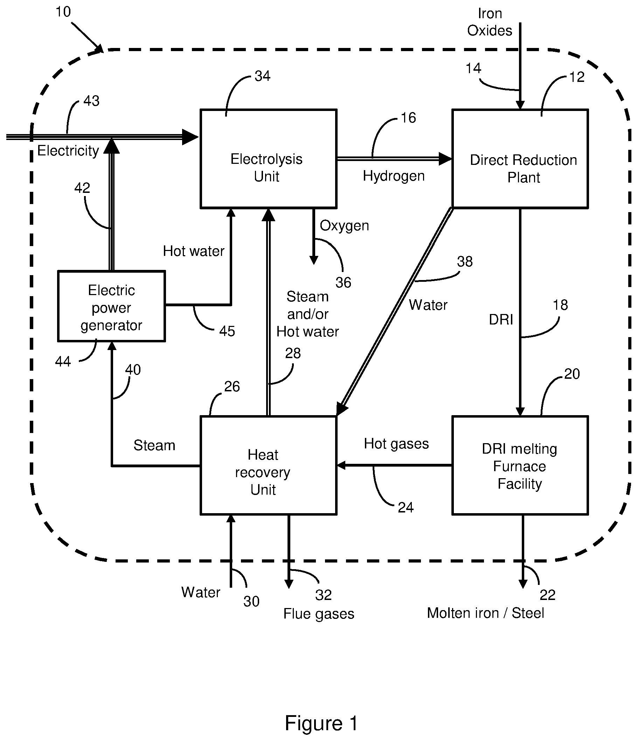

Referring to Figure 1, numeral 10 generally designates a steelmaking system with reduced CO₂ emissions comprising a direct reduction facility 12 where iron oxides 14 are chemically reduced in solid form by means of a reducing agent such as hydrogen 16 and which are transformed to direct reduced iron (DRI) 18 in solid form containing metallic iron. The DRI 18 is further processed, alone or mixed with steel scrap, in a melt-shop 20 typically comprising electric-arc furnaces (EAF) and ladle furnaces for metallurgical processing to produce steel 22 or other molten iron containing products such as pig iron or ferroalloys. The EAF of the melt-shop 20 produces an important amount of gases 24 at high temperature, in the order of from 1000°C to 1400°C. The heat of these hot gases 24 is recovered in a heat recovery unit 26 by means of suitable heat-exchangers to produce steam 28, and/or hot liquid water at a temperature below about 100°C, from water feed 30 and the colder flue gases 32 are treated in a manner known in the art before being properly released to the atmosphere.

Steam 28, and/or hot liquid water, produced utilizing the heat of the hot gases 24 is fed to an electrolysis unit 34 where water is split into a hydrogen stream 16 and an oxygen stream 36. The hydrogen stream 16 is fed to a direct reduction facility 12 to produce DRI 18 from iron oxides bearing materials 14. Iron oxides 14 are chemically reduced to metallic iron (DRI) 18 by hydrogen 16 whereby water 38 is produced by the reaction: FeₓO_{y} + yH₂ → xFe + yH₂O. The oxygen 36 can be used in the direct reduction plant 12 and/or in the DRI melting furnace 20 and for many other purposes in the steelmaking system 10.

In a steelmaking system according to the invention, the water 38 produced by the reduction reaction of hydrogen with the iron oxides is cleaned, properly treated, heated and converted to steam 28 which is split again into hydrogen 16 which is re-used for the reduction of iron oxides thus forming a hydrogen recycling loop. This synergy of a direct reduction plant 12 with a heat recovery unit 26 and an electrolysis unit 34 significantly reduces the carbon footprint of the steelmaking process.

In another embodiment of the invention, all or a portion of the steam 40, produced in the heat recovery unit 26, is used to generate electricity 42 in an electric generator 44, which electricity is then used in the electrolysis unit 34 together or in place of other sources of electricity 43. The water condensed 45 after generation of electricity can also be utilized in the electrolysis unit 34 for hydrogen generation.

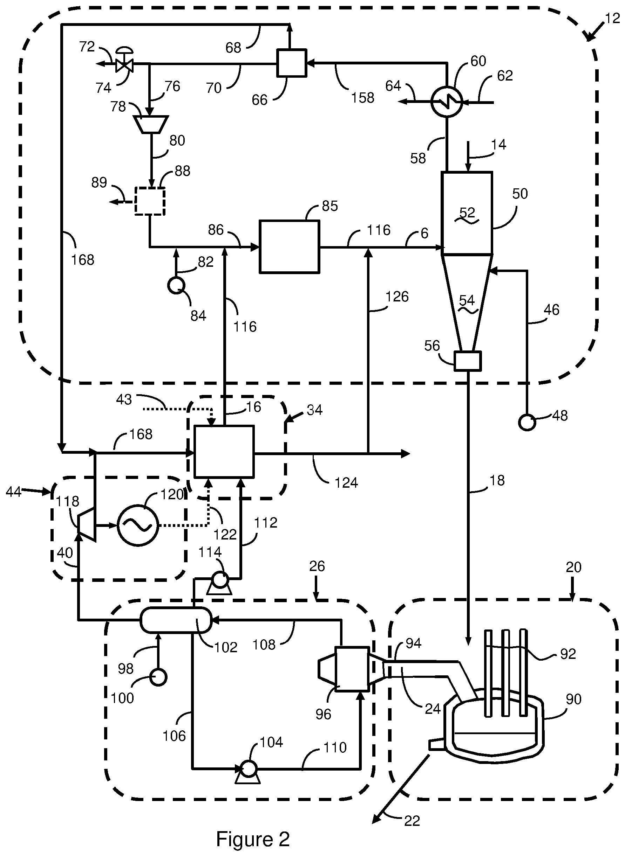

Referring to Figure 2, the direct reduction plant 12 comprises a direct reduction shaft furnace 50 having a reduction zone 52 and a lower discharge zone 54 from which DRI 18 is discharged at a regulated rate by means of a suitable discharge mechanism 56, for example a rotary star feeder, a vibrating feeder, a screw feeder and the like. Iron oxides in the form of pellets, lumps or mixtures thereof 14 are fed to the reduction furnace 50 and descend by gravity through the reduction zone 52 were DRI containing metallic iron is formed by reaction of said iron oxides with a reducing gas stream 6 at high temperature in the range between about 800°C and about 1050 °C and mainly composed of hydrogen 16, which can also comprise carbon monoxide, carbon dioxide, methane and nitrogen in those embodiments wherein a hydrocarbon such as natural gas or a syngas derived from coal is used as the source of the reducing gas 6.

A stream of exhausted reducing gas is extracted from said reduction furnace 50 as top gas 58 containing non-reacted hydrogen due to the limitations of chemical equilibrium and kinetics of the reduction reactions, water produced as a by-product of said reduction reactions, and in some embodiments also carbon monoxide, carbon dioxide, methane and nitrogen in case a hydrocarbon such as natural gas or a syngas derived from coal is used as the source of the reducing gas 6 in the direct reduction furnace 50. The top gas 58 exits the direct reduction furnace 50 at a temperature in the range from about 300°C to 450°C and is passed through a heat exchanger 60 where a suitable fluid 62 is heated, for example water, to produce steam 64. The steam 64 can be utilized in an optional CO₂ removal unit or utilized to produce hydrogen in the electrolysis unit 34, or alternatively the heat of top gas 58 can be utilized to preheat the reducing gas stream 6 fed to the reduction furnace.

The top gas 58, after exiting heat exchanger 60 through the conduit 158 is cleaned and cooled down in a gas cooler 66 with water. The water vapour contained in the top gas 58 is condensed in the cooler 66 as water stream 68 and can be fed to the electrolysis unit 34 through the conduit 168 after a proper treatment in a manner known in the art.

A minor portion of the clean and cooled top gas 70, added in Figure 2, may be withdrawn from the reduction system as gas stream 72 to prevent accumulation of inert gases in the reducing gas recycle, if applicable. Valve 74 is used to regulate the amount of top gas purged from the reduction plant 12 and also to regulate the operating pressure of the reduction plant 12. A major portion 76 of the clean top gas 70 is recycled through a compressor 78, which elevates its pressure to recycle said top gas 70 to the reduction furnace 50.

The recycled gas stream 80, mainly composed of hydrogen is then passed through a gas heater 85 to elevate its temperature in the range from about 800°C to about 1000°C so that the reduction reactions with iron oxides take place inside the reduction furnace 50.

Optionally, a stream of make-up hydrocarbon gas 82 is added to the recycled gas stream 80 from a suitable source 84 to generate hydrogen and carbon monoxide that may form part of the reducing gas 6 fed to the reduction furnace 50.

In an embodiment, the hydrocarbon gas 82, such as natural gas, is transformed to hydrogen and carbon monoxide by reaction with water and carbon dioxide contained in the recycled gas stream 80 in a catalytic reformer 85 thus forming the reducing gas stream 6.

In a further embodiment, reformation of the hydrocarbon gas 82 to hydrogen and carbon monoxide is effected in the reduction furnace 50 along with the reduction reactions and in such case the combined stream 86 of recycled gas 80 and make-up hydrocarbon gas 82 is heated in heating unit 85 without a catalyst in contrast to the case where said unit 85 is a reformer.

In the invention embodiments wherein a hydrocarbon gas 82 is also utilized as a source of the reducing gas 6, the recycled gas stream 80 is treated in a CO₂ removal unit 88 to separate CO₂ 89 produced as a by-product of the reduction reactions of carbon monoxide with the iron oxides. The CO₂ removal unit may be of the type wherein CO₂ is selectively removed by action of a solvent such as a solution of amines or potassium carbonate or can be of the type where CO₂ is separated by physical adsorption on a PSA (pressure swing adsorption), VPSA (vacuum pressure swing adsorption) or gas membranes unit.

Optionally, the make-up hydrocarbon gas 82 is coke oven gas, natural gas, syngas from biomass or other methane-containing and/or H₂ or CO-containing gas.

Optionally, the carbon content in the DRI can be adjusted for its further processing in the melting furnace 90, in a wide range from about 0.5% to about 6%, preferably between about 2.5% to 3.5%, by injecting a carburizing gas 46 from a suitable source 48, which may be a hydrocarbon gas, coke oven gas, natural gas, syngas from biomass, or mixtures thereof, or other methane-containing and/or CO-containing syngas or any other carbon-containing gas that may deposit carbon in the DRI.

In an embodiment, the DRI is discharged cold from the reduction furnace 50 by circulating a cooling gas in the lower portion 54 of the reduction furnace 50 in a manner known in the art. In this case, the carbon content of the DRI can be effected by using as cooling gas a DRI carburizing gas, which may be a hydrocarbon gas, coke oven gas, natural gas, syngas from biomass, or mixtures thereof, or other methane-containing and/or CO-containing syngas or any other carbon-containing gas that may deposit carbon in the DRI.

Typically, DRI is discharged from said reduction furnace 50 at high temperature in the range between about 300°C and about 750 °C, preferably between about 600°C and about 700 °C and charged hot to a melting furnace 90, usually an electric arc furnace, having electrodes 92 and a gas extraction duct 94 to collect the hot gases that are produced during the charging, melting and refining of DRI and optionally also steel scrap. These hot gases exit the electric arc furnace 90 at high temperature in the range of 1000°C to 1400°C.

Heat contained in hot gas 24 extracted from the melting furnace 90 through duct 94 is utilized to produce steam 108 in a heat exchanger 96 where water 98 is fed from a suitable source 100. A steam drum 102 collects the steam and forms part of a heat recovery loop through which water is circulated by means of one or several pumping units 104 and pipes 106, 108 and 110.

Optionally, hot water can also be extracted from steam drum 102, through pipe 112 and pumping unit 114, and fed to electrolysis unit 34.

Water collected to the electrolysis unit 34 is used to produce hydrogen 16 which is fed through pipe 116 to the direct reduction furnace 50 after mixing with recycled gas stream 80 and hydrocarbon gas 82 in the combined stream 86 entering the gas heater or catalytic reformer indicated with numeral 85 according to the alternative embodiment discussed above.

In another embodiment, energy of steam 40 withdrawn from steam drum 102 is fed to a turbine 118 which drives an electricity generator 120 to produce electricity 122 which is used in the electrolysis unit 34 for the production of hydrogen 16.

Optionally, hot water exiting from turbine 118 can be fed to the electrolysis unit 34 through the conduit 168 after a proper treatment in a manner known in the art.

In the electrolysis unit 34 a stream of oxygen 124 is produced and can be used optionally to raise the temperature of the reducing gas 6 by partial combustion feeding it through pipe 126 to pipe 116, or in the DRI melting or refining process carried out in the electric arc furnace 90 or otherwise in the direct reduction plant 12 or the melting furnace facility 20.

The electrolysis unit 34 may be of any type available for industrial use and can also be a co-electrolysis unit wherein both water is decomposed into hydrogen and oxygen and CO₂ is also split into carbon monoxide and oxygen. The electricity 122 produced by generator 120 can be used in the electrolysis unit 34 together or in place of other available sources of electricity 43.

In another embodiment, the system of the invention comprises a polymer electrolyte membrane electrolyser (PEM), or an alkaline electrolyser where a liquid alkaline solution of sodium or potassium hydroxide is used as the electrolyte, or a solid oxide electrolyser (SOE) which uses a solid ceramic material as the electrolyte that selectively conducts negatively charged oxygen ions at elevated temperatures.

The invention thus provides a synergistic system to produce steel or a molten-iron containing material by integrating a direct reduction plant 12, a DRI melting furnace 20, a heat recovery unit 26, a steam turbine-electricity generator 44 and an electrolysis unit 34 with lower CO₂ emissions than the currently used steelmaking systems.

It is of course to be understood that the above description of the invention has been written for illustrative purposes and that the scope of the invention is not limited to the embodiments herein described but is defined by the appended claims, and that a number of changes and modifications may be made to the embodiments of the invention comprised by the scope of these claims.

## Claims

1. A method to produce steel or molten iron containing materials (22) with reduced emissions of carbon dioxide comprising producing DRI (18) in a direct reduction furnace (12, 50) with a reducing gas (6) comprising hydrogen (16); melting at least a portion of said DRI in a melting furnace (20) and generating hot gases (24); producing steam and/or hot water (28, 40) using the heat contained in said hot gases (24); **characterized by** producing hydrogen (16) from said steam and/or hot water (28, 40) by electrolysis and feeding at least a portion of said hydrogen (16) to said direct reduction furnace (12, 50) as a component of said reducing gas (6) to produce said DRI (18).

2. A method to produce steel or molten iron containing materials (22) according to claim 1, further **characterized by** generating electric energy (42) utilizing said steam (40); and using said electric energy (42) to produce said hydrogen (16) by electrolysis.

3. A method for producing steel or molten iron containing materials (22) according to claim 1, wherein said melting furnace (20) is an electric arc furnace (EAF).

4. A method for producing steel or molten iron containing materials (22) according to claim 1, further **characterized by** producing oxygen (36,124) by electrolysis and using at least a portion of said oxygen (36,124) to raise the temperature of reducing gas (6) prior to its feeding to the reduction reactor (12, 50).

5. A method for producing steel or molten iron containing materials (22) according to claim 1, further **characterized by** producing oxygen (36,124) by electrolysis and using at least a portion of said oxygen (36, 124) in the electric-arc furnace (20) wherein said steel or molten iron containing materials (22) are produced.

6. A method for producing steel or molten iron containing materials (22) according to claim 1, further **characterized by** obtaining at least a portion of the water used for producing hydrogen by electrolysis from condensed water vapour contained in an exhausted reducing gas stream extracted from said direct reduction furnace as top gas (58).

7. A system (10) to produce steel or molten iron containing materials (22) with reduced emissions of carbon dioxide, comprising a direct reduction furnace (12, 50) to produce DRI (18) with a reducing gas (6) comprising hydrogen (16); a DRI melting furnace (20) to melt said DRI (18) generating hot gases (24); a heat recovery unit (26) to produce steam and/or hot water (28, 40) using the heat contained in said hot gases (24); and an electrolysis unit (34) to produce hydrogen (16) from said steam and/or hot water (28), which hydrogen (16) is fed to said direct reduction furnace (12, 50) as a component of said reducing gas (6) to produce DRI (18).

8. A system (10) to produce steel or molten iron containing materials (22) according to claim 7, further comprising an electric power generator (44) to produce electric energy (42) utilizing steam (40) from the heat recovery unit (26), which electricity is used in said electrolysis unit (34) to produce hydrogen (16).

9. A system (10) for producing steel or molten iron containing materials (22) according to claim 7, wherein said DRI (18) is melted in an electric-arc furnace (20) and high-temperature gases (24) are generated, and also comprising a first heat exchange unit (26) to produce steam or hot water (28, 40) using heat from said high-temperature gases (24) effluent from said electric-arc furnace (20); further **characterized by** also comprising an electrolysis unit (34) to produce hydrogen (16) from said steam or hot water (28); a first conduit (116) connecting said electrolysis unit (34) and said direct reduction furnace (12, 50) to feed at least a portion of said hydrogen (16) to produce said DRI (18); and an electric-arc furnace (20, 90) to melt said DRI (18) to produce said steel or molten iron containing materials (22).

10. A system (10) for producing steel or molten iron containing materials (22) according to claim 7, further **characterized by** comprising an electric generator (44) to produce electric energy (42) using said steam (40) and electric conducting means connecting said electric generator (44) and said electrolysis unit (34) to produce said hydrogen (16) by electrolysis.

11. A system (10) for producing steel or molten iron containing materials (22) according to claim 9, further **characterized by** comprising a second conduit (126) connecting said electrolysis (34) unit and said first conduit means (116) to feed at least a portion of oxygen (36,124) produced by electrolysis in said electrolysis unit (34) to raise the temperature of reducing gas (6) prior to being fed to said direct reduction furnace (12, 50).

12. A system (10) for producing steel or molten iron containing materials (22) according to claim 9, further **characterized by** comprising a gas cooler (66) connected to said direct reduction furnace (12, 50) to cool at least a portion of exhausted reducing gas extracted from said direct reduction furnace (12, 50) as top gas (58) containing water formed by the reduction of iron oxides to metallic iron; a fourth conduit (158) connecting said direct reduction furnace and said gas cooler; and a fifth conduit (168) connecting said gas cooler and said electrolysis unit (34).

13. A system (10) for producing steel or molten iron containing materials (22) according to claim 12, further **characterized by** comprising a water treatment unit to clean and condition said condensed water (68) prior to being used in said electrolysis unit (34).

## Patentansprüche

1. Verfahren zum Produzieren von Stahl oder schmelzeisenhaltigen Materialien (22) mit reduzierten Kohlenstoffdioxidemissionen, umfassend ein Produzieren von DRI (18) in einem Direktreduktionsofen (12, 50) mit einem Reduktionsgas (6), welches Wasserstoff (16) umfasst; ein Schmelzen wenigstens eines Anteils des DRI in einem Schmelzofen (20) und ein Generieren von heißen Gasen (24); ein Produzieren von Dampf und/oder heißem Wasser (28, 40) unter Verwendung der Wärme, welche in den heißen Gasen (24) beinhaltet ist; **gekennzeichnet durch** ein Produzieren von Wasserstoff (16) aus dem Dampf und/oder dem heißen Wasser (28, 40) durch Elektrolyse und ein Zuführen wenigstens eines Anteils des Wasserstoffs (16) zu dem Direktreduktionsofen (12, 50) als eine Komponente des Reduktionsgases (6), um das DRI (18) zu produzieren.

2. Verfahren zum Produzieren von Stahl oder schmelzeisenhaltigen Materialien (22) nach Anspruch 1, ferner **gekennzeichnet durch** ein Generieren von elektrischer Energie (42) durch ein Verwenden des Dampfes (40); und ein Verwenden der elektrischen Energie (42), um den Wasserstoff (16) durch Elektrolyse zu produzieren.

3. Verfahren zum Produzieren von Stahl oder schmelzeisenhaltigen Materialien (22) nach Anspruch 1, wobei der Schmelzofen (20) ein Elektrolichtbogenofen (EAF) ist.

4. Verfahren zum Produzieren von Stahl oder schmelzeisenhaltigen Materialien (22) nach Anspruch 1, ferner **gekennzeichnet durch** ein Produzieren von Sauerstoff (36, 124) durch Elektrolyse und ein Verwenden wenigstens eines Anteils des Sauerstoffs (36, 124), um die Temperatur des Reduktionsgases (6) zu erhöhen, bevor es dem Reduktionsreaktor (12, 50) zugeführt wird.

5. Verfahren zum Produzieren von Stahl oder schmelzeisenhaltigen Materialien (22) nach Anspruch 1, ferner **gekennzeichnet durch** ein Produzieren von Sauerstoff (36, 124) durch Elektrolyse und ein Verwenden wenigstens eines Anteils des Sauerstoffs (36, 124) in dem Elektrolichtbogenofen (20), wobei der Stahl oder die schmelzeisenhaltigen Materialien (22) produziert werden.

6. Verfahren zum Produzieren von Stahl oder schmelzeisenhaltigen Materialien (22) nach Anspruch 1, ferner **gekennzeichnet durch** ein Erhalten von wenigstens einem Anteil des Wassers, welches zum Produzieren von Wasserstoff durch Elektrolyse verwendet wird, aus kondensiertem Wasserdampf, welcher in einem ausgelassenen Reduktionsgasstrom beinhaltet ist, welcher aus dem Direktreduktionsofen als Kopfgas (58) extrahiert wird.

7. System (10) zum Produzieren von Stahl oder schmelzeisenhaltigen Materialien (22) mit reduzierten Kohlenstoffdioxidemissionen, umfassend einen Direktreduktionsofen (12, 50) zum Produzieren von DRI (18) mit einem Reduktionsgas (6), welches Wasserstoff (16) umfasst; einen DRI-Schmelzofen (20) zum Schmelzen des DRI (18), wobei heiße Gase (24) generiert werden; eine Wärmerückgewinnungseinheit (26) zum Produzieren von Dampf und/oder heißem Wasser (28, 40) unter Verwendung der Wärme, welche in den heißen Gasen (24) beinhaltet ist; und eine Elektrolyseeinheit (34) zum Produzieren von Wasserstoff (16) aus dem Dampf und/oder dem heißen Wasser (28), wobei der Wasserstoff (16) dem Direktreduktionsofen (12, 50) als eine Komponente des Reduktionsgases (6) zugeführt wird, um DRI (18) zu produzieren.

8. System (10) zum Produzieren von Stahl oder schmelzeisenhaltigen Materialien (22) nach Anspruch 7, ferner umfassend einen elektrischen Leistungsgenerator (44) zum Produzieren elektrischer Energie (42), wobei Dampf (40) von der Wärmerückgewinnungseinheit (26) verwendet wird, wobei die elektrische Energie in der Elektrolyseeinheit (34) verwendet wird, um Wasserstoff (16) zu produzieren.

9. System (10) zum Produzieren von Stahl oder schmelzeisenhaltigen Materialien (22) nach Anspruch 7, wobei das DRI (18) in einem Elektrolichtbogenofen (20) geschmolzen wird und Hochtemperaturgase (24) generiert werden, und ebenfalls umfassend eine erste Wärmetauschereinheit (26), um Dampf oder heißes Wasser (28, 40) unter Verwendung von Wärme von den Hochtemperaturgasen (24) zu produzieren, welche von dem Elektrolichtbogenofen (20) entfleuchen; ferner **gekennzeichnet dadurch, dass** es ebenfalls eine Elektrolyseeinheit (34) umfasst, um Wasserstoff (16) aus dem Dampf oder dem heißen Wasser (28) zu produzieren; eine erste Leitung (116), welche die Elektrolyseeinheit (34) und den Direktreduktionsofen (12, 50) verbindet, um wenigstens einen Anteil des Wasserstoffs (16) zuzuführen, um das DRI (18) zu produzieren; und einen Elektrolichtbogenofen (20, 90), um das DRI (18) zu schmelzen, um den Stahl oder die schmelzeisenhaltigen Materialien (22) zu produzieren.

10. System (10) zum Produzieren von Stahl oder schmelzeisenhaltigen Materialien (22) nach Anspruch 7, ferner **gekennzeichnet dadurch, dass** es einen elektrischen Generator (44) umfasst, um elektrische Energie (42) zu produzieren unter Verwendung des Dampfes (40) und elektrisch leitender Mittel, welche den elektrischen Generator (44) und die Elektrolyseeinheit (34) verbinden, um den Wasserstoff (16) durch Elektrolyse zu produzieren.

11. System (10) zum Produzieren von Stahl oder schmelzeisenhaltigen Materialien (22) nach Anspruch 9, ferner **gekennzeichnet dadurch, dass** es eine zweite Leitung (126) umfasst, welche die Elektrolyse-(34)-Einheit und die ersten Leitungsmittel (116) verbindet, um wenigstens einen Anteil von Sauerstoff (36, 124) zuzuführen, welcher mittels Elektrolyse in der Elektrolyseeinheit (34) produziert wird, um die Temperatur eines Reduktionsgases (6) zu erhöhen, bevor es dem Direktreduktionsofen (12, 50) zugeführt wird.

12. System (10) zum Produzieren von Stahl oder schmelzeisenhaltigen Materialien (22) nach Anspruch 9, ferner **gekennzeichnet dadurch, dass** es einen Gaskühler (66) umfasst, welcher mit dem Direktreduktionsofen (12, 50) verbunden ist, um wenigstens einen Anteil von ausgelassenem Reduktionsgas zu kühlen, welches aus dem Direktreduktionsofen (12, 50) als Kopfgas (58) extrahiert wird, welches Wasser beinhaltet, welches durch die Reduktion von Eisenoxiden zu metallischem Eisen gebildet wird; eine vierte Leitung (158), welche den Direktreduktionsofen und den Gaskühler verbindet, und eine fünfte Leitung (168), welche den Gaskühler und die Elektrolyseeinheit (34) verbindet.

13. System (10) zum Produzieren von Stahl oder schmelzeisenhaltigen Materialien (22) nach Anspruch 12, ferner **gekennzeichnet dadurch, dass** es eine Wasserbehandlungseinheit umfasst, um das kondensierte Wasser (68) zu reinigen und zu konditionieren, bevor es in der Elektrolyseeinheit (34) verwendet wird.

## Revendications

1. Procédé de production d'acier ou de matériaux contenant du fer fondu (22) avec des émissions réduites de dioxyde de carbone comprenant les étapes consistant à produire du DRI (18) dans un fourneau de réduction directe (12, 50) avec un gaz réducteur (6) comprenant de l'hydrogène (16) ; à faire fondre au moins une partie dudit DRI dans un fourneau de fusion (20) et à générer des gaz chauds (24) ; à produire de la vapeur et/ou de l'eau chaude (28, 40) en utilisant la chaleur contenue dans lesdits gaz chauds (24) ; **caractérisé par** la production d'hydrogène (16) à partir desdites vapeur et/ou eau chaude (28, 40) par électrolyse et par l'alimentation d'au moins une partie dudit hydrogène (16) audit fourneau de réduction directe (12, 50) comme composant dudit gaz réducteur (6) pour produire ledit DRI (18).

2. Procédé de production d'acier ou de matériaux contenant du fer fondu (22) selon la revendication 1, **caractérisé en outre par** la génération d'énergie électrique (42) en utilisant ladite vapeur (40) ; et en utilisant ladite énergie électrique (42) pour produire ledit hydrogène (16) par électrolyse.

3. Procédé de production d'acier ou de matériaux contenant du fer fondu (22) selon la revendication 1, dans lequel ledit fourneau de fusion (20) est un fourneau à arc électrique (EAF).

4. Procédé de production d'acier ou de matériaux contenant du fer fondu (22) selon la revendication 1, **caractérisé en outre par** la production d'oxygène (36, 124) par électrolyse et l'utilisation d'au moins une partie dudit oxygène (36, 124) pour élever la température du gaz réducteur (6) avant son alimentation au réacteur de réduction (12, 50).

5. Procédé de production d'acier ou de matériaux contenant du fer fondu (22) selon la revendication 1, **caractérisé en outre par** la production d'oxygène (36, 124) par électrolyse et l'utilisation d'au moins une partie dudit oxygène (36, 124) dans le fourneau à arc électrique (20) dans lequel lesdits acier ou matériaux contenant du fer fondu (22) sont produits.

6. Procédé de production d'acier ou de matériaux contenant du fer fondu (22) selon la revendication 1, **caractérisé en outre par** l'obtention d'au moins une partie de l'eau utilisée pour produire l'hydrogène par électrolyse à partir de vapeur d'eau condensée contenue dans une vapeur de gaz réducteur épuisée extraite dudit fourneau de réduction directe comme gaz de tête (58).

7. Système (10) de production d'acier ou de matériaux contenant du fer fondu (22) avec des émissions réduites de dioxyde de carbone, comprenant un fourneau de réduction directe (12, 50) pour produire du DRI (18) avec un gaz réducteur (6) comprenant de l'hydrogène (16) ; un fourneau de fusion (20) de DRI pour faire fondre ledit DRI (18) générant des gaz chauds (24) ; une unité de récupération de chaleur (26) pour produire de la vapeur et/ou de l'eau chaude (28, 40) en utilisant la chaleur contenue dans lesdits gaz chauds (24) ; et une unité d'électrolyse (34) pour produire de l'hydrogène (16) à partir desdites vapeur et/ou eau chaude (28), lequel hydrogène (16) est alimenté audit fourneau de réduction directe (12, 50) comme composant dudit gaz réducteur (6) pour produire du DRI (18).

8. Système (10) de production d'acier ou de matériaux contenant du fer fondu (22) selon la revendication 7, comprenant en outre un générateur d'énergie électrique (44) pour produire de l'énergie électrique (42) en utilisant de la vapeur (40) provenant de l'unité de récupération de chaleur (26), laquelle électricité est utilisée dans ladite unité d'électrolyse (34) pour produire de l'hydrogène (16).

9. Système (10) de production d'acier ou de matériaux contenant du fer fondu (22) selon la revendication 7, dans lequel ledit DRI (18) est fondu dans un fourneau à arc électrique (20) et des gaz à haute température (24) sont générés, et comprenant également une première unité d'échange de chaleur (26) pour produire de la vapeur ou de l'eau chaude (28, 40) en utilisant de la chaleur provenant desdits gaz à haute température (24) effluents dudit fourneau à arc électrique (20) ; **caractérisé en outre en ce qu'**il comprend également une unité d'électrolyse (34) pour produire de l'hydrogène (16) à partir desdites vapeur ou eau chaude (28) ; une première conduite (116) raccordant ladite unité d'électrolyse (34) et ledit fourneau de réduction directe (12, 50) pour alimenter au moins une partie dudit hydrogène (16) pour produire ledit DRI (18) ; et un fourneau à arc électrique (20, 90) pour faire fondre ledit DRI (18) pour produire lesdits acier ou matériaux contenant du fer fondu (22).

10. Système (10) de production d'acier ou de matériaux contenant du fer fondu (22) selon la revendication 7, **caractérisé en outre en ce qu'**il comprend un générateur électrique (44) pour produire de l'énergie électrique (42) en utilisant ladite vapeur (40) et un moyen de conduction électrique connectant ledit générateur électrique (44) et ladite unité d'électrolyse (34) pour produire ledit hydrogène (16) par électrolyse.

11. Système (10) de production d'acier ou de matériaux contenant du fer fondu (22) selon la revendication 9, **caractérisé en outre en ce qu'**il comprend une seconde conduite (126) raccordant ladite unité d'électrolyse (34) et ledit premier moyen formant conduite (116) pour alimenter au moins une partie de l'oxygène (36, 124) produit par électrolyse au niveau de ladite unité d'électrolyse (34) pour élever la température du gaz réducteur (6) avant qu'il soit alimenté audit fourneau de réduction directe (12, 50).

12. Système (10) de production d'acier ou de matériaux contenant du fer fondu (22) selon la revendication 9, **caractérisé en outre en ce qu'**il comprend un refroidisseur de gaz (66) raccordé audit fourneau de réduction directe (12, 50) pour refroidir au moins une partie du gaz réducteur épuisé extrait dudit fourneau de réduction directe (12, 50) comme gaz de tête (58) contenant de l'eau formée par la réduction d'oxydes de fer en fer métallique ; une quatrième conduite (158) raccordant ledit fourneau de réduction directe et ledit refroidisseur de gaz ; et une cinquième conduite (168) raccordant ledit refroidisseur de gaz et ladite unité d'électrolyse (34).

13. Système (10) de production d'acier ou de matériaux contenant du fer fondu (22) selon la revendication 12, **caractérisé en outre en ce qu'**il comprend une unité de traitement d'eau pour nettoyer et conditionner ladite eau condensée (68) avant qu'elle soit utilisée dans ladite unité d'électrolyse (34).
